# EUROPEAN PATENT SPECIFICATION

(11) **EP 3 001 191 B1**
(45) Date of publication and mention of the grant of the patent: **10.04.2019**
(21) Application number: 15184710.0
(22) Date of filing: 10.09.2015
(51) Int. Cl.: G01N 31/22

(54) **A SPECTROPHOTOMETRIC METHOD FOR DETERMINING THE GOLD CONTENT IN SOLUTIONS, POROUS STRUCTURES, OR AT THE SURFACES OF SOLIDS**
SPEKTROPHOTOMETRISCHES VERFAHREN ZUR BESTIMMUNG DES GOLDGEHALTS IN LÖSUNGEN, PORÖSEN STRUKTUREN ODER AN DEN OBERFLÄCHEN VON FESTKÖRPERN
PROCÉDÉ SPECTROPHOTOMÉTRIQUE POUR DÉTERMINER LA TENEUR EN OR DANS DES SOLUTIONS, DES STRUCTURES POREUSES, OU AU NIVEAU DE SURFACES DE SOLIDES

(30) Priority: 29.09.2014 PL 40962614
(43) Date of publication of application: 30.03.2016
(73) Proprietor: Instytut Chemii Fizycznej Polskiej Akademii Nauk, 01-224 Warszawa (PL)
(72) Inventor: Andryszewski, Tomasz, 87-720 Ciechocinek (PL); Iwan, Michalina, 02-972 Warszawa (PL); Kalinska, Patrycja, 04-671 Warszawa (PL); Fialkowski, Marcin, 01-006 Warszawa (PL); Holyst, Robert, 02-703 Warszawa (PL)
(74) Representative: Dargiewicz, Joanna

(56) References cited:
- MARCZENKO Z ET AL: "Sensitive flotation-spectrophotometric determination of gold based on the gold(III)/bromide/rhodamine 6G system", ANALYTICA CHIMICA ACTA, ELSEVIER, AMSTERDAM, NL, vol. 176, 1 January 1985 (1985-01-01), pages 185-191, XP026618072, ISSN: 0003-2670, DOI: 10.1016/S0003-2670(00)81645-1 [retrieved on 1985-01-01]
- POLLOCK E N ET AL: "The determination of gold by atomic absorption spectrophotometry", ANALYTICA CHIMICA ACTA, ELSEVIER, AMSTERDAM, NL, vol. 41, 1 January 1968 (1968-01-01), pages 441-446, XP026712637, ISSN: 0003-2670, DOI: 10.1016/S0003-2670(01)80425-6 [retrieved on 1968-01-01]
- FOWLES G W A ET AL: "The reaction of gold halides with some sulphur-containing ligands", JOURNAL OF THE LESS-COMMON METALS, ELSEVIER-SEQUOIA S.A. LAUSANNE, CH, vol. 32, no. 3, 1 September 1973 (1973-09-01), pages 379-384, XP024075365, ISSN: 0022-5088, DOI: 10.1016/0022-5088(73)90175-6 [retrieved on 1973-09-01]

## Description

The invention is related to a novel spectrophotometric method for determining the gold content in solutions, porous structures, or at the surfaces of solids, wherein this metal occurs in the form of nano-objects coated with inorganic or organic ligands.

There are numerous publications known in the literature, wherein golden nanoparticles of any sizes are obtained from salts of gold, in particular from salts of auric acid (HAuCl₄) in the process of reduction with sodium borohydride. [Langmuir 2010 26 (10), 7410-7417]. In the scientific publications describing the synthesis of metallic nanoparticles, the concentration of these objects is calculated based on their size (the initial amount of the nanoparticle-forming atoms) as well as on the amount of ions of the metal used in the synthesis. *[*Chem. Commun., 2006, 1433-1435 *(Supplementary info)]* By the same, the authors assume total conversion of the accessible metal to the form of nano-objects. Another method for determining the concentration and size of nanoparticles of metals - gold, in particular - is the method employing the UV-Vis absorption spectra. [Colloids and Surfaces B: Biointerfaces 58 (2007), 3-7] [Anal. Chem, 2007, 79, 4215-4221] Such methods offer the possibility of rapid estimation of the concentration as well as the size of gold nanoparticles, what is of particular importance in the case of objects characterised by instability. Also, the methods for estimation of the gold content in porous structures are known, wherein the scanning electron microscope is the basically used tool [Cellulose. 21 (2014), 395-405] .

The object of this invention is the development of a novel, spectrophotometric method for determining the gold content in solutions or porous structures containing golden nano-objects.

The object of the invention is a spectrophotometric method for determining the gold content in solutions, porous structures or at the surfaces of solids, especially containing golden nano-objects, consisting in that gold complexes are formed in the assayed sample, in the form of lithium, sodium, potassium or ammonium tetrabromoaurate(III), wherein the gold complexes are prepared by gradually adding a mixture containing water, a solution of bromine water, and ammonium bromide or an alkali metal salt in the form of lithium bromide, sodium bromide or potassium bromide, respectively, into the assayed sample containing an aqueous solution of nano-objects of gold, wherein the mixture is added until the solution turns light-orange.

Preferably, after adding the mixture, the assayed sample is evaporated to dryness in a water bath and dissolved in water again.

Preferably, a standard curve is used for determining the gold content in the assayed sample.

Preferably, to make the standard curve, two calibrators (LC and HC) are used, preferably in the form of aqueous solutions of potassium, sodium, lithium or ammonium tetrabromoaurate(III) having a known gold content in the range of 9 to 150 mg Au/litre.

Preferably, the concentration of gold in the LC and HC calibrators is determined spectrophotometrically using a solution of HAuCl₄.

Preferably, the step of determining the concentration of gold in the LC and HC calibrators comprises successively:
- preparing at least three vials containing a mixture of water, a solution of HAuCl₄, an aqueous solution of trisodium citrate and a solution of sodium borohydride in the solution of trisodium citrate,
- vigorous mixing the contents of each vial and leaving them for at least 10 hours,
- gradual adding, into each vial, a mixture of water, a solution of bromine water, and, respectively, ammonium bromide or an alkali metal salt in the form of lithium bromide, sodium bromide or potassium bromide, in an amount necessary to turning the solutions light-orange,
- placing the vials in a water bath at a temperature of below 100°C, preferably 80°C, and allowing them to evaporate,
- adding a defined amount of water into each vial for obtaining standard solutions having a known gold content,
- recording the UV-Vis spectra in the range of 290-900 nm for each of the standard solutions, that are the basis for calculating the standard absorbance value (A_{standard}) as a difference of the absorbances at two differing wavelengths, preferably at 382 and 325 nm, followed by calculating the average standard absorbance value (A_{av. standard}),
- recording the UV-Vis spectra in the range of 290-900 nm for the calibrator solutions (LC, HC), that are the basis for calculating the absorbance difference value as a difference of the absorbances at two differing wavelengths, preferably at 382 and 325 nm,
- calculating the concentration of gold in the calibrators, preferably from the mathematical proportion.

Preferably, for each of the calibrator solutions (LC and HC), the UV-Vis spectrum is recorded in the range of 290-900 nm, using a glass or polymer cell containing water as a reference, then the absorbance value is read from the recorded spectra at two wavelengths, preferably 382 and 325 nm, whereafter the absorbance change values (ΔA) are calculated for both solutions as a difference of absorbance at two wavelengths, wherein these values form two points in the diagram of the relationship ΔA=f(c_{Au}), that are the basis for determining a and b coefficients for a line described by the equation ΔA = a·c_{Au} + b.

Preferably, after making the standard curve, the UV-Vis spectrum of the assayed sample is recorded, the absorbance values are read at two differing wavelengths, preferably at 382 and 325 nm, and ΔA is calculated, and then the value of the concentration of gold in the assayed sample is calculated based on the equation of the line ΔA = a·c_{Au} + b.

Preferably, the method comprises the step of preparing a solution for determining the gold content in porous structures or at the surfaces of solids, wherein the assayed sample having a known mass, containing golden nano-objects bound in the structure or at the surface thereof, is placed into a specified volume of a mixture of water, a solution of bromine water, and, respectively, ammonium bromide or an alkali metal salt in the form of lithium bromide, sodium bromide or, preferably, potassium bromide, followed by placing the whole sample into an ultrasonic cleaner, preferably for 10 minutes, in order to extract the formed gold ions into the aqueous phase.

Preferably, following the sonication step, the whole is filtered, and a specified volume of the clear solution is taken from the filtrate, which is then evaporated to dryness in a water bath at a temperature of below 100°C, preferably 80°C, and a specified volume of water is added to the dry residue.

The invention discloses a novel spectrophotometric analytical method for determining the gold content in solutions, porous structures as well as at the surfaces of solids, wherein this metal occurs in the form of nano-objects coated with inorganic or organic ligands, wherein the coloured chemical species of gold in the form of lithium, sodium, potassium or ammonium tetrabromoaurates(III), that are highly soluble in water, are obtained as final products.

A significant advantage of the method of the invention is its simplicity as well as low time-consuming analysis, as well as a low cost of materials necessary for performing the analysis. The range of applicability for this method is 9-150 mg Au/litre of the analyte. The obtained calibrators LC and HC exhibit the stability of calibration for up to 3 hours in the case of storage at a room temperature, whereas they exhibit the absorbance drop by 1% after being stored frozen for 6 months.

The inventive method will be demonstrated in more detail in the following example, which in no way should be construed as limiting the scope of the protection.

### Example

A spectrophotometric method for determining the amount of gold in solutions as well as in porous structures containing golden nano-objects.

### Step 1 - Preparation of an aqueous mixture of bromine with an alkali metal bromide or ammonium bromide

The glass bottle, preferably of dark glass, is filled with 100 ml of water as well as several drops of pure bromine, in an amount sufficient to obtain a concentrated solution, preferably, at a concentration corresponding to the maximum solubility of this element in water. The whole mixture is left for several (at least 12) hours to obtain thereby a saturated solution of bromine water having a deep orange colour.

In the next step, another bottle of dark glass is charged with 75 ml of water, 25 ml of a saturated solution of bromine water as well as 10.8 mmol of ammonium bromide or an alkali metal salt in the form of lithium bromide, sodium bromide, or preferably 1.285 g of potassium bromide. 100 ml of the mixture obtained in this step can dissolve 0.74 g of pure gold.

### Step 2 - Preparation of the calibrators

In the first step, 86.1 mg of potassium tetrabromoaurate(III) dihydrate are weighed using analytical balance, followed by dissolving in 3.5 ml of water, to obtain thereby a solution having an estimated concentration of 41.55 mmol/litre (8185.7 mg Au/litre). In the next step, the prepared solution is diluted to prepare two calibrators: LC, having a concentration of about 50 mgAu/litre (16.2714 ml of water + 0.1 ml of the solution of KAuBr₄), as well as HC, having a concentration of about 100 mg Au/litre (16.1714 ml of water + 0.2 ml of the solution of KAuBr₄).

### Step 3 - Determining the titre of the LC and HC calibrators

Three vials are charged with 20 ml of water, 0.2 ml a solution of HAuCl₄ (obtained by dissolving 94,4 mg of HAuCl₄ trihydrate in 9,4 ml of water), 0.2 ml aqueous solution of trisodium citrate (at the concentration c = 29.28 mmol/litre) as well as 0.2 ml of a solution of sodium borohydride in the solution of trisodium citrate, obtained by dissolving 44.3 mg of sodium borohydride in 40 ml of aqueous solution of trisodium citrate having a concentration of 29.28 mmol/litre. The whole is vigorously mixed and left for several (at least 10) hours. In the next step, each vial is gradually charged with the mixture obtained in Step 1, in an amount necessary to observe the discolouration of the solutions from deep-red to light-orange. Then the vials are placed in a water bath at a temperature of below 100°C (preferably, 80°C), and left to evaporate. Each vial is charged with 20 ml of water, to obtain thereby the standard solutions having a gold content of 50.223 mg/litre.

In the next step, a UV-Vis spectrum is recorded for each solution, using a glass or polymer cell having an optical path of 1 cm in the range of 290-900 nm, the spectra being the basis for calculating the value of A_{standard} = A₃₈₂ₙₘ - A₃₂₅ₙₘ. Then the average standard absorbance value (A_{av. standard}) is determined, that corresponds to the concentration of 50.223 mgAu/litre. The UV-Vis spectra for the calibrator solutions (LC, HC) obtained in Step 2 are recorded in an analogous manner. The value of the difference A₃₈₂ₙₘ - A₃₂₅ₙₘ is calculated for each of the calibrators. In the last step, the concentration of gold in the LC and HC calibrators is calculated from the simple mathematical proportion.

During the studies aimed at developing the method of the invention, the UV-Vis spectra were recorded on an Evolution 220 spectrophotometer from Thermo Scientific using polymeric cells having an optical path of 1 cm.

### Step 4 - Processing of the assayed sample (an aqueous solution)

Into a sample containing 10 ml of an aqueous solution of nano-objects of gold, the mixture prepared in Step 1 is gradually added until the solution colour turns from deep-red or violet to light-orange. In the next step, the contents of the vial is evaporated to dryness in a water bath at a temperature of below 100°C, preferably 80°C, in order to remove the halogen, and then 2 ml of water are added to the dry residue using a pipette.

### Step 5 - Processing of the assayed sample (a porous structure)

The assayed sample of known mass, e.g., a 0.5 g sample of cellulose containing nano-objects of gold bound in its structure, is placed in a beaker. In the next step, 10 ml of the solution obtained in Step 1 are added to the sample, followed by placing the whole sample in an ultrasonic cleaner for 10 minutes, in order to extract the formed gold ions into the aqueous phase. In the next step, the whole sample is filtered, and an aliquot of 5 mL of a clear solution is taken from the filtrate, followed by evaporation to dryness in a water bath at a temperature of below 100°C, preferably 80°C. 2 ml of water are added to the dry residue, to obtain a clear, orange solution.

### Step 6 - Making the calibration curve

A two-point calibration is used for making the calibration curve. Because of the established linearity range, the concentrations of the LC and HC calibrators may fall into the range of 9 - 150 mg Au/litre. Two glass or polymer cells having an optical path of 1 cm are filled with 1.5 ml of each of two aqueous standard solutions KAuBr₄ (LC and HC) having a gold content of 50 and 100 mg/litre, respectively. In the next step, the baseline is recorded with the UV-Vis spectrophotometer, using two cells containing water as references, in the range of wavelengths 290-900 nm. Then, for each of the calibrator solutions (LC and HC), the UV-Vis spectrum is recorded in the range of 290-900 nm, using a glass or polymer cell containing water as a reference. The absorbance value at 382 and 325 nm is read from the recorded spectra. For each sample, the absorbance change value (ΔA) is calculated as a difference of A₃₈₂ - A₃₂₅. In the next step, the diagram of the relationship ΔA=f(c_{Au}) is plotted, wherein c_{Au} denotes the concentration of gold ions in mg/litre, and, based on the obtained two points, by automatic methods or by least square method, the **a** and **b** coefficients are determined for a line described by the equation ΔA = a·c_{Au} + b.

### Step 7 - Measurement of the gold content in the assayed sample

The sample prepared in Step 4 or Step 5, that contains an unknown amount of gold, is transferred into a glass or polymer cell having the optical path of 1 cm. Then the UV-Vis spectrum is recorded, preferably in 1 duplicate, in the range of 290-900 nm, using a cell containing water as a reference. The value of ΔA as a difference of A₃₈₂ₙₘ - A₃₂₅ₙₘ is read from the obtained UV-Vis spectrum. In the case when the determined value of ΔA for the assayed sample is higher than 2.5 absorbance units, the assayed sample should be diluted, and the dilution should be accounted for while determining the final concentration of gold in the assayed sample. In the case when the value of ΔA for the assayed sample is lower than 0.25 absorbance unit, the assayed sample should be concentrated, since the amount of gold in the assayed sample is below the sensitivity range of the presented analytical method. In the last step, the value of the concentration of gold in the assayed sample is calculated based on the equation determined in Step 6 as well as the value of ΔA for the assayed sample.

## Claims

1. A spectrophotometric method for determining the gold content in solutions, porous structures or at the surfaces of solids, especially containing golden nano-objects, **characterised in that** gold complexes are formed in the assayed sample, in the form of lithium, sodium, potassium or ammonium tetrabromoaurate(III), wherein the gold complexes are prepared by gradually adding a mixture containing water, a solution of bromine water, and ammonium bromide or an alkali metal salt in the form of lithium bromide, sodium bromide or potassium bromide, respectively, into the assayed sample containing an aqueous solution of nano-objects of gold, wherein the mixture is added until the solution turns light-orange, and wherein the color is spectrophotometrically determined.

2. The method according to claim 1, **characterised in that** after adding the mixture, the assayed sample is evaporated to dryness in a water bath and dissolved in water again.

3. The method according to claim 1 or 2, **characterised in that** a standard curve is used for determining the gold content in the assayed sample.

4. The method according to claim 3, **characterised in that,** to make the standard curve, two calibrators are used in the form of aqueous solutions of potassium, sodium, lithium or ammonium tetrabromoaurate(III) having a known gold content in the range of from 9 to 150 mg Au/litre.

5. The method according to claim 4, **characterised in that** the concentration of gold in the low concentration and high concentration calibrators is determined spectrophotometrically using a solution of HAuCl₄.

6. The method according to claim 5, **characterised in that** the step of determining the concentration of gold in the low concentration and high concentration calibrators comprises successively:
• preparing at least three vials containing a mixture of water, a solution of HAuCl₄, an aqueous solution of trisodium citrate and a solution of sodium borohydride in the solution of trisodium citrate,
• vigorous mixing of the contents of each vial and leaving them for at least 10 hours,
• gradual adding, into each vial, a mixture of water, a solution of bromine water, and, respectively, ammonium bromide or an alkali metal salt in the form of lithium bromide, sodium bromide or potassium bromide, in an amount necessary to turning the solutions light-orange,
• placing the vials in a water bath at a temperature of below 100°C, preferably 80°C, and allowing them to evaporate,
• adding a defined amount of water into each vial for obtaining standard solutions having a known gold content,
• recording the UV-Vis spectra in the range of 290-900 nm for each of the standard solutions, that are the basis for calculating the standard absorbance value (A_{standard}) as a difference of the absorbances at two differing wavelengths, preferably at 382 and 325 nm, followed by calculating the average standard absorbance value (Aₐᵥ. standard),
• recording the UV-Vis spectra in the range of 290-900 nm for the calibrator solutions (LC, HC), that are the basis for calculating the absorbance difference value as a difference of the absorbances at two differing wavelengths, preferably at 382 and 325 nm,
• calculating the concentration of gold in the calibrators, preferably from the mathematical proportion.

7. The method according to claim 5 or 6, **characterised in that** for each of the calibrator solutions the UV-Vis spectrum is recorded in the range of 290-900 nm, using a glass or polymer cell containing water as a reference, then the absorbance value is read from the recorded spectra at two wavelengths, whereafter the absorbance change values (ΔA) are calculated for both solutions as a difference of absorbances at two wavelengths, wherein these values form two points in the diagram of the relationship ΔA=f(c_{Au}), that are the basis for determining the a and b coefficients for a line described by the equation ΔA = a·c_{Au} + b.

8. The method according to claim 7, **characterised in that,** after making the standard curve, the UV-Vis spectrum of the assayed sample is recorded, the absorbance values are read at two differing wavelengths and ΔA is calculated, and then the value of the concentration of gold in the assayed sample is calculated based on the equation of the line ΔA = a·c_{Au} + b.

9. The method according to any one of the preceding claims, **characterised in that** it comprises the step of preparing a solution for determining the gold content in porous structures or at the surfaces of solids, wherein the assayed sample having a known mass, containing golden nano-objects bound in the structure or at the surface thereof, is placed into a specified volume of a mixture of water, a solution of bromine water, and, respectively, ammonium bromide or an alkali metal salt in the form of lithium bromide, sodium bromide or, preferably, potassium bromide, followed by placing the whole sample into an ultrasonic cleaner for 10 minutes, in order to extract the formed gold ions into the aqueous phase.

10. The method according to claim 9, **characterised in that** following the sonication step, the whole sample is filtered, and a specified volume of the clear solution is taken from the filtrate, which is then evaporated to dryness in a water bath at a temperature of below 100°C and a specified volume of water is added to the dry residue.

## Patentansprüche

1. Spektralphotometrisches Verfahren zum Bestimmen des Goldgehalts in Lösungen, porösen Strukturen oder Oberflächen von Feststoffen, die insbesondere goldene Nano-Objekte enthalten,
**dadurch gekennzeichnet, dass** in der untersuchten Probe Goldkomplexe in Form von Lithium-, Natrium-, Kalium- oder Ammoniumtetrabromat (III) gebildet werden, wobei die Goldkomplexe hergestellt werden, indem allmählich eine wasserhaltige Mischung, eine Lösung von Bromwasser und Ammoniumbromid oder ein Alkalimetallsalz in Form von Lithiumbromid, Natriumbromid bzw. Kaliumbromid in die untersuchte Probe gegeben werden, die eine wässrige Lösung von Nanoobjekten aus Gold enthält, wobei die Mischung zugegeben wird, bis die Lösung hellorange wird, und wobei die Farbe spektralphotometrisch bestimmt wird.

2. Verfahren nach Anspruch 1, **dadurch gekennzeichnet, dass** die untersuchte Probe nach Zugabe der Mischung in einem Wasserbad bis zur Trockenheit verdampft und wieder in Wasser gelöst wird.

3. Verfahren nach Anspruch 1 oder 2, **dadurch gekennzeichnet, dass** eine Standardkurve zum Bestimmen des Goldgehalts in der untersuchten Probe verwendet wird.

4. Verfahren nach Anspruch 3, **dadurch gekennzeichnet, dass** zur Herstellung der Standardkurve zwei Kalibratoren in Form von wässrigen Lösungen von Kalium-, Natrium-, Lithium- oder Ammoniumtetrabromat (III) mit einem bekannten Goldgehalt im Bereich von 9 bis 150 mg Au/I verwendet werden.

5. Verfahren nach Anspruch 4, **dadurch gekennzeichnet, dass** die Goldkonzentration in den Kalibratoren niedriger Konzentration und hoher Konzentration spektralphotometrisch unter Verwendung einer Lösung von HAuCl₄ bestimmt wird.

6. Verfahren nach Anspruch 5, **dadurch gekennzeichnet, dass** der Schritt des Bestimmens der Konzentration von Gold in den Kalibratoren mit niedriger und hoher Konzentration nacheinander umfasst:
- Herstellen von mindestens drei Probengefäßen, die eine Mischung aus Wasser, einer Lösung von HAuCl₄, einer wässrigen Lösung von Trinatriumcitrat und einer Lösung von Natriumborhydrid in der Lösung von Trinatriumcitrat enthalten,
- kräftiges Mischen des Inhalts jedes Probengefäßes und mindestens 10 Stunden langes Liegenlassen,
- schrittweise Zugabe einer Mischung aus Wasser, einer Lösung von Bromwasser bzw. Ammoniumbromid oder einem Alkalimetallsalz in Form von Lithiumbromid, Natriumbromid oder Kaliumbromid in einer Menge, die erforderlich ist, um die Lösungen hellorange zu machen, in jedes Probengefäß,
- Platzieren der Probengefäße in einem Wasserbad bei einer Temperatur unter 100°C, vorzugsweise 80°C, und Verdampfen lassen,
- Zugabe einer definierten Wassermenge in jedes Fläschchen, um Standardlösungen mit einem bekannten Goldgehalt zu erhalten,
- Aufzeichnen der UV-Vis-Spektren im Bereich von 290-900 nm für jede der Standardlösungen, die die Grundlage für die Berechnung des Standard-Absorptionswerts (A_{Standard}) als Differenz der Absorptionen bei zwei unterschiedlichen Wellenlängen, vorzugsweise bei 382 und 325 nm, bilden, gefolgt von der Berechnung des durchschnittlichen Standard-Absorptionswerts (A_{av, Standard}),
- Aufzeichnen der UV-Vis-Spektren im Bereich von 290-900 nm für die Kalibrierlösungen (LC, HC), die die Grundlage für die Berechnung des Absorptionsdifferenzwertes als Differenz der Absorptionen bei zwei unterschiedlichen Wellenlängen, vorzugsweise bei 382 und 325 nm, bilden,
- Berechnen der Goldkonzentration in den Kalibratoren, vorzugsweise aus dem mathematischen Verhältnis.

7. Verfahren nach Anspruch 5 oder 6, **dadurch gekennzeichnet, dass** für jede der Kalibrierlösungen das UV-Vis-Spektrum im Bereich von 290-900 nm aufgezeichnet wird, wobei ein Glas einer Polymerzelle verwendet wird, die Wasser als Referenz enthält, dann wird der Absorptionswert aus den aufgezeichneten Spektren bei zwei Wellenlängen abgelesen, woraufhin die Absorptionsänderungswerte (ΔA) für beide Lösungen als Differenz der Absorptionen bei Wellenlängen berechnet werden, wobei diese Werte zwei Punkte im Diagramm der Beziehung ΔA=f(c_{Au}) bilden, die die Grundlage für das Bestimmen der a- und b-Koeffizienten für eine durch die Gleichung ΔA = a·c_{Au} + b beschriebene Linie sind.

8. Verfahren nach Anspruch 7, **dadurch gekennzeichnet, dass** nach der Erstellung der Standardkurve das UV-Vis-Spektrum der untersuchten Probe aufgezeichnet, die Absorptionswerte bei zwei unterschiedlichen Wellenlängen abgelesen und ΔA berechnet wird, und dann der Wert der Goldkonzentration in der untersuchten Probe basierend auf der Gleichung der Linie ΔA = a·c_{Au} + b berechnet wird.

9. Verfahren nach einem der vorhergehenden Ansprüche, **dadurch gekennzeichnet, dass** es den Schritt des Herstellens einer Lösung zum Bestimmen des Goldgehalts in porösen Strukturen oder an den Oberflächen von Feststoffen umfasst, wobei die untersuchte Probe mit einer bekannten Masse, die goldene Nano-Objekte enthält, die in der Struktur oder an ihrer Oberfläche gebunden sind, in ein bestimmtes Volumen einer Mischung aus Wasser, einer Lösung von Bromwasser und jeweils Ammoniumbromid oder einem Alkalimetallsalz in Form von Lithiumbromid, Natriumbromid oder vorzugsweise Kaliumbromid eingebracht wird, gefolgt von einer 10-minütigen Einbringung der gesamten Probe in einen Ultraschallreiniger, um die gebildeten Goldionen in die wässrige Phase zu extrahieren.

10. Verfahren nach Anspruch 9, **dadurch gekennzeichnet, dass** nach dem Ultraschall-Schritt die gesamte Probe gefiltert und dem Filtrat ein bestimmtes Volumen der klaren Lösung entnommen wird, das dann in einem Wasserbad bei einer Temperatur von unter 100°C bis zur Trockenheit verdampft und dem Trockenrückstand ein bestimmtes Volumen an Wasser zugegeben wird.

## Revendications

1. Un procédé spectrophotométrique pour la détermination de la teneur en or dans des solutions, des structures poreuses ou à la surface de solides, contenant en particulier des nano-objets d'or, **caractérisé en ce que** des complexes d'or sont formés dans l'échantillon analysé, sous forme de tétrabromoaurate(III) de lithium, sodium, potassium ou ammonium, les complexes d'or étant préparés par addition progressive d'un mélange contenant de l'eau, une solution d'eau de brome et de bromure d'ammonium ou d'un sel de métal alcalin sous forme de bromure de lithium, de bromure de sodium ou de bromure de potassium, respectivement, dans l'échantillon analysé contenant une solution aqueuse de nano-objets d'or, le mélange étant ajouté jusqu'à ce que la solution devienne orange clair, et la couleur étant déterminée par spectrophotométrie.

2. Le procédé selon la revendication 1, **caractérisé en ce qu'**après l'addition du mélange, l'échantillon analysé est évaporé à sec dans un bain-marie et dissous à nouveau dans l'eau.

3. Le procédé selon la revendication 1 ou la revendication 2, **caractérisé en ce qu'**une courbe étalon est utilisée pour déterminer la teneur en or dans l'échantillon analysé.

4. Le procédé selon la revendication 3, **caractérisé en ce que**, pour établir la courbe étalon, il est utilisé deux calibreurs sous forme de solutions aqueuses de tétrabromoaurate(III) de potassium, sodium, lithium ou ammonium ayant une teneur connue en or située dans la gamme allant de 9 à 150 mg Au/litre.

5. Le procédé selon la revendication 4, **caractérisé en ce que** la concentration en or dans les calibreurs à faible concentration et à concentration élevée est déterminée de façon spectrophotométrique en utilisant une solution de HAuCl₄.

6. Le procédé selon la revendication 5, **caractérisé en ce que** l'étape de détermination de la concentration en or dans les calibreurs à faible concentration et à concentration élevée comprend successivement :
• le fait de préparer au moins trois flacons contenant un mélange d'eau, une solution de HAuCl₄, une solution aqueuse de citrate trisodique et une solution de borohydrure de sodium dans la solution de citrate trisodique,
• le fait de mélanger vigoureusement le contenu de chaque flacon et les laisser au repos pendant au moins 10 heures,
• le fait d'ajouter graduellement, dans chaque flacon, un mélange d'eau, une solution d'eau bromée et, respectivement, de bromure d'ammonium ou d'un sel de métal alcalin sous forme de bromure de lithium, de bromure de sodium ou de bromure de potassium, en une quantité nécessaire pour amener les solutions à être orange clair,
• le fait de placer les flacons dans un bain-marie à une température inférieure à 100°C, de préférence 80°C, et les laisser s'évaporer,
• le fait d'ajouter une quantité définie d'eau dans chaque flacon pour obtenir des solutions étalons ayant une teneur en or connue,
• le fait d'enregistrer les spectres UV-Vis dans la gamme allant de 290 à 900 nm pour chacune des solutions étalons, qui servent de base pour le calcul de la valeur d'absorbance étalon (A_{standard}) qui est la différence des absorbances à deux longueurs d'onde différentes, de préférence à 382 et 325 nm, puis le fait de calculer la valeur moyenne des absorbances étalons (A_{av, standard}.),
• le fait d'enregistrer les spectres UV-Vis dans la gamme allant de 290 à 900 nm pour les solutions d'étalonnage (LC, HC), qui servent de base au calcul de la valeur de la différence d'absorbance en tant que différence des absorbances à deux longueurs d'onde différentes, de préférence à 382 et 325 nm,
• le fait de calculer la concentration en or dans les calibreurs, de préférence à partir des proportions mathématiques.

7. Le procédé selon la revendication 5 ou la revendication 6, **caractérisé en ce que**, pour chacune des solutions d'étalonnage, le spectre UV-Vis est enregistré dans la gamme allant de 290 à 900 nm,
en utilisant comme référence une cellule en verre ou en polymère contenant de l'eau, puis la valeur d'absorbance est lue sur les spectres enregistrés à deux longueurs d'onde,
après quoi les valeurs de variation d'absorbance (ΔA) sont calculées pour les deux solutions sous la forme d'une différence d'absorbance à deux longueurs d'onde, ces valeurs formant deux points dans le diagramme de la relation ΔA=f(c_{Au}) qui sont la base pour déterminer les coefficients a et b pour une droite décrite par l'équation ΔA= a·c_{Au} + b.

8. Le procédé selon la revendication 7, **caractérisé en ce que** le spectre UV-Vis de l'échantillon analysé est enregistré après l'établissement de la courbe étalon, les valeurs d'absorbance sont lues à deux longueurs d'onde différentes et ΔA est calculée, puis la valeur de la concentration en or de l'échantillon analysé est calculée sur la base de l'équation ΔA = a·c_{Au} + b.

9. Le procédé selon l'une quelconque des revendications précédentes, **caractérisé en ce qu'**il comprend l'étape de préparation d'une solution pour déterminer la teneur en or dans des structures poreuses ou à la surface de solides, l'échantillon analysé, ayant une masse connue, contenant des nano-objets d'or liés dans la structure ou à la surface de celle-ci, étant placé dans un volume déterminé d'un mélange d'eau, d'une solution d'eau bromée et, respectivement, de bromure d'ammonium ou d'un sel de métal alcalin sous forme de bromure de lithium, de bromure de sodium ou, de préférence, de bromure de potassium, suivi du fait de placer l'échantillon entier dans un nettoyeur ultrasonique pendant 10 minutes, afin d'extraire les ions or formés dans la phase aqueuse.

10. Le procédé selon la revendication 9, **caractérisé en ce qu'**après l'étape de sonication, l'échantillon entier est filtré et un volume déterminé de la solution claire est prélevé du filtrat, lequel est ensuite évaporé à sec dans un bain-marie à une température inférieure à 100°C et un volume déterminé d'eau est ajouté au résidu sec.
